Europäisches Patentamt

(19) European Patent Office

Office européen des brevets

(11) **EP 0 652 837 B1**

(12) **EUROPEAN PATENT SPECIFICATION**

(45) Date of publication and mention
of the grant of the patent:
**09.07.1997 Bulletin 1997/28**

(21) Application number: **93917983.4**

(22) Date of filing: **04.08.1993**

(51) Int. Cl.⁶: **B62D 7/15**, B62D 6/00
// B62D101/00, B62D105/00,
B62D111/00, B62D113/00

(86) International application number:
**PCT/GB93/01643**

(87) International publication number:
**WO 94/03354 (17.02.1994 Gazette 1994/05)**

(54) **A WHEELED VEHICLE STEERING SYSTEM**

LENKSYSTEM FÜR EIN RÄDERFAHRZEUG

SYSTEME DE DIRECTION POUR VEHICULE A ROUES

(84) Designated Contracting States:
**BE DE ES FR GB IT SE**

(30) Priority: **04.08.1992 GB 9216547**

(43) Date of publication of application:
**17.05.1995 Bulletin 1995/20**

(73) Proprietor: **LOTUS CARS LIMITED**
**Norwich, Norfolk NR14 8EZ (GB)**

(72) Inventor: **ARLANDIS, Thierry, Hubert**
**Flat D, 59 Earlham Road**
**Norfolk NR2 3RD (GB)**

(74) Representative: **Pluckrose, Anthony William et al**
**Boult, Wade & Tennant**
**27 Furnival Street**
**London EC4A 1PQ (GB)**

(56) References cited:
**EP-A- 0 346 178          EP-A- 0 467 413**
**WO-A-90/14980          DE-A- 3 804 587**

• **PATENT ABSTRACTS OF JAPAN vol. 14, no. 300**
**(M-991)(4243) 28 June 1990 & JP,A,02 095 985**
**(SUZUKI MOTOR CO LTD) 6 April 1990**
• **PATENT ABSTRACTS OF JAPAN vol. 11, no. 360**
**(M-645)(2807) 25 November 1987 & JP,A,62 137**
**275 (TOYOTA MOTOR CORP) 20 June 1987**

## Description

The present invention relates to a steering system for the rear wheels of a wheeled vehicle having front and rear wheels.

"Four wheel" steer has been known previously and one such system is described in the patent specification of International publication No. WO-A-90/14980 of the applicant, which will be extensively referred to hereinafter.

The steering system of WO-A-90/14980 uses a processor to compare desired steering (as sensed by a sensor connected directly or indirectly to a steering wheel) with the actual steering of the vehicle (determined using a yaw gyrometer or lateral accelerometer). The steer angle of the rear wheels is controlled as a function of the error between the desired and actual vehicle turning.

The system described in WO-A-90/14980 has been found not to cope well with oversteer slide conditions. In a normal vehicle when a vehicle starts to slide due to oversteer, the driver can apply "reverse lock" (i.e. steering in the opposite sense to the sense of the steering on commencement of the slide) to correct the slide. It has been found that the closed loop steering system previously described in WO-A-90/14980 produces undesirable effects in an oversteer slide when "reverse lock" is applied.

During an oversteer slide the rear tyres lose considerable grip and it is difficult to generate correcting forces during the slide by using the rear wheels. This situation changes dramatically at the end of the slide, when the rear wheels regain full grip. With the high bandwidth control system of WO-A-90/14980 the rear wheels move rapidly to full lock when the "reverse lock" is applied to the steering wheel by the driver. Therefore the wheels are in an undesirable position on recovery. Furthermore, as the reverse lock is taken off by the driver, the rear wheels tend to move from one lock to the other quickly. This action of the rear wheels during the oversteer condition and return to normal conditions leads to unstable and undesired vehicle motion.

The Patent Abstract of Japan to JP-A-62137275 (the features of which correspond to the preamble of claim 1) describes a steering system for the rear wheels of a vehicle which comprises: an actuator for steering the rear wheels; sensor means for sensing the lateral speed of the vehicle, the longitudinal speed of the vehicle and a front wheel steering angle; a control system for controlling a ratio of rear wheel steering angle to front wheel steering angle which comprises a processor which processes the signals generated by the sensor means and controls the steering ratio accordingly. The control system detects reverse handling of the vehicle by calculating a body slip angle from the lateral car speed signal and the longitudinal car speed signal and compares the sense of the body slip angle with the sense of the front wheel steering angle and the control system to conclude that there is reverse handling when the calculated car body slip angle is opposite in sense to the front wheel steering angle and the sum of the absolute values of the car body slip angle and the front wheel steering angle exceeds a given value. When reverse handling is detected the controlled steering ratio is varied to zero or is varied such that front and rear wheels all steer in the same direction.

The present invention provides a steering system for the rear wheels of a vehicle comprising an actuator for steering the rear wheels, sensor means for measuring vehicle parameters and generating signals indicative thereof, and a control system for controlling the actuator to steer the rear wheels comprising a processor which processes the signals generated by the sensor means and controls the actuator accordingly, wherein the control system has detection means to detect when the signals generated by the sensor means indicate that the vehicle is sliding and override means which modifies the operation of the control system when sliding is detected, and wherein the sensor means measure the displacement of a manually operable steering element of the vehicle and from the measurement generate a desired steer angle signal characterised in that the sensor means also measure yaw rate of the vehicle and generate a measured yaw rate signal, the processor determines a desired yaw rate signal as a function of the signal indicative of the desired steer angle and the control system comprises a closed yaw rate error control loop feedback system for controlling the steer angle of the rear wheels as a function of the error between the measured yaw rate signal and the desired yaw rate signal, the override means altering a gain in the yaw rate error control loop when sliding is detected.

Thus the steering system has means to detect slide and acts to improve the performance of a rear wheel steer vehicle in a slide situation.

In preferred embodiments of the invention the detection means is adapted to detect oversteer slide.

Preferably the sensor means further measure vehicle velocity and generate a measured velocity signal and the detection means compares the measured velocity signal with a preprogrammed velocity threshold, the override means only modifying the operation of the control system when detection means detects that the measured velocity signal exceeds the velocity threshold.

This ensures that the operation of the control system is not modified during parking and other low velocity manoeuvres.

Preferably the sensor means additionally measures the lateral acceleration of the vehicle and generate a measured lateral acceleration signal and the detection means compares the measured lateral acceleration signal with a first preprogrammed lateral acceleration threshold, the override means only modifying the operation of the control system when the detection means detects that the measured lateral acceleration signal exceeds the first lateral acceleration threshold.

This again ensures that unwanted modification of the operation of the control system at low speeds is avoided.

Preferably the detection means includes a low pass filter by which the measured lateral acceleration signal is filtered before it is compared with the lateral acceleration threshold.

This ensures that modification does not occur if lateral acceleration is only momentarily greater than the threshold.

Preferably the sensor means are capable of measuring the lateral acceleration of the vehicle and of generating a measured lateral acceleration signal and the detection means combines the measured yaw rate signal, the desired steer angle signal and the measured lateral acceleration signal according to a preprogrammed algorithm to generate a variable which is compared with a preprogrammed value, the override means only modifying the operation of the control system when the detection means detects that the variable exceeds the preprogrammed value. This will be described in greater detail later.

Preferably the sensor means are capable of measuring lateral acceleration of the vehicle and of generating a measured lateral acceleration signal and the detection means monitors whether the desired steer angle signal and the lateral acceleration signal are in the same sense and the override means only modifies the operation of the control system when the detection means detects that the desired steer angle signal and the lateral acceleration signal are of opposite sense.

Thus an "opposite lock" is detected.

Preferably the override means reduces a gain of the control system from a first level to a second level when the detection means detects that the signals generated by the sensor means indicate that the vehicle is sliding and the override means increases the gain from the second level to the first level when the detection means detects from the signals generated by the sensor means that the sliding of the vehicle has stopped, the override means ramping the gain between the first and second levels at preprogrammed rates.

This ensures a smooth transition between gains.

The override means preferably ramps the gain from the first level to the lower second level at a rate which is faster than the rate at which it ramps the gain from the second level to the first level.

It is advantageous to quickly alter the performance of the control system as the vehicle enters the slide, when the rear wheels loose traction. It is advantageous to more slowly alter the control system at the end of a slide to prevent instability as the rear wheel regains traction.

In a preferred embodiment the sensor means are capable of measuring lateral acceleration and of generating a measured lateral acceleration signal and the detection means compares the measured lateral acceleration signal with a second preprogrammed lateral acceleration threshold, the override means increasing the rate at which the gain of the control system is ramped from the second level to the first level when the detection means detects that the measured lateral acceleration signal is less than the second preprogrammed lateral acceleration threshold.

The override means can make further allowances for slide conditions by introducing a phase lead or a phase lag in the yaw rate error control loop.

A preferred embodiment of the present invention will now be described with reference to the accompanying drawings in which;

Figure 1 is a schematic representation of a vehicle with a rear steer system;
Figure 2 illustrates a control system for operating the rear steer control unit of the invention;
Figure 3 shows graphically how the gain of the closed loop control system for controlling the rear wheels varies with vehicle velocity;
Figure 4 shows graphically a transition of the desired loop gain of the rear steer system between its value for normal operating conditions and its value in oversteer slide conditions;
Figure 5 shows graphically how a return to a value of closed loop gain for normal conditions can be accelerated.

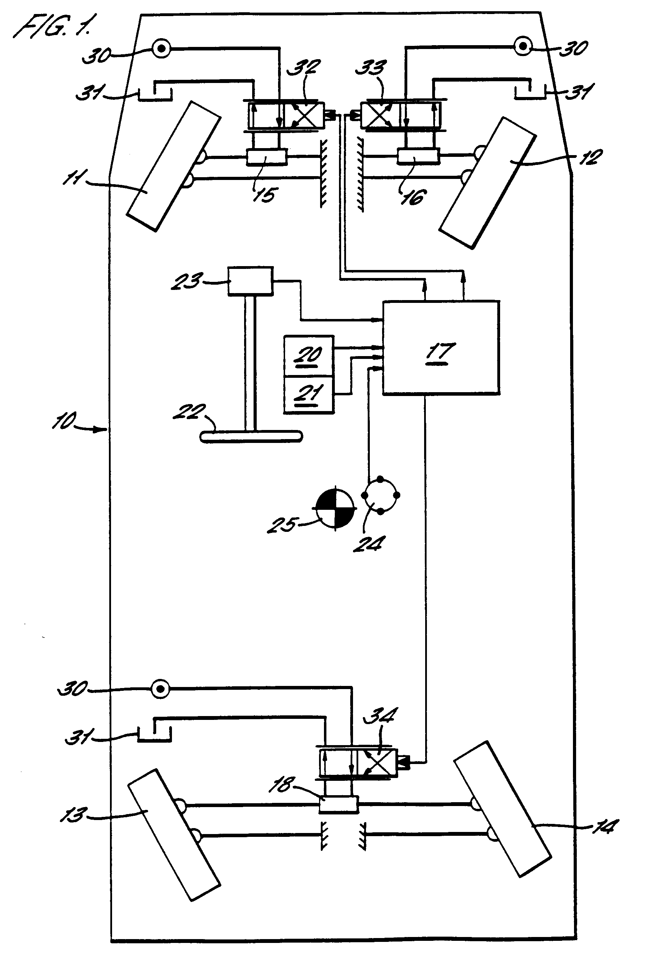

The vehicle steering control system has already been described in WO-A-90/14980, but will be recapped with reference to Figure 1 in which a vehicle 10 has front wheels 11 and 12 and rear wheels 13 and 14. The front wheels 11 and 12 are respectively steered by actuators 15 and 16 which are controlled by a digital processor 17. The rear wheels 13 and 14 are steered by one actuator 18, again controlled by digital processor 17.

A vehicle speed sensor 20 is provided and its output is supplied to the digital processor 17. The vehicle speed sensor 20 is in the preferred embodiment an optical sensor.

An accelerometer 21 is provided to measure the lateral acceleration ny of the vehicle. The output of the accelerometer 21 is supplied to the digital processor 17. A manually controlled steering element in the form of a steering wheel 22 is provided and a sensor 23 is connected to the steering wheel to measure the angle of turning of the wheel 22. The output of the sensor 23 is supplied to digital processor 17.

A yaw gyrometer 24 is mounted in the vehicle as near as possible to the centre of gravity 25 of the vehicle. The yaw gyrometer 24 generates a signal indicative of the yaw rate r of the vehicle, which is sent to the controller 17.

The actuators 17, 16 and 18 are all of a known type comprising double acting hydraulic actuators containing a piston. One side of the piston is connected to the tie rod of a vehicle wheel through an aperture in the cylinder end wall.

The actuators are controlled by the control of hydraulic fluid to the sides of the piston from a suitable source of hydraulic pressure (e.g. a pump 30) and to a suitable exhaust for fluid (e.g. a reservoir of fluid 31 for a pump).

The digital processor 17 controls servo-valves 32,33 and 34 to control the actuators 15, 16 and 18. It controls the servo-valves using electrical signals and thereby controls the fluid flow to the actuators.

A desired steer angle $\beta f$ is measured by the sensor 23. A signal indicative of the measured desired steer angle $\beta f$ is supplied to the control processor 17. The digital processor 17 controls the steering angle of the front wheels to $\beta f$ using an open loop control system.

The control processor 17 controls the rear wheels 13 and 14 of the vehicle using a closed loop system which uses a yaw rate error calculated by the processor 17 which is calculated as the difference between the desired yaw rate of the vehicle (calculated as a function of desired steer angle $\beta f$) and the measured yaw rate r of the vehicle as measured by yaw gyrometer 25.

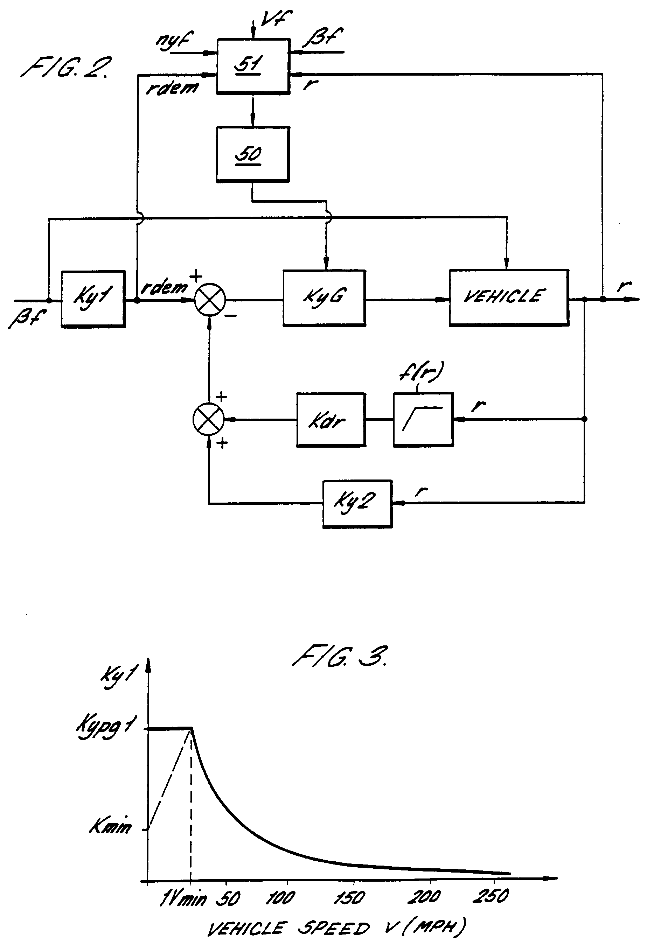

Figure 2 shows a block diagram of the closed loop control system controlling the rear actuators, the algorithm for which is as follows:-

$$\beta r = KyG * (\beta f * Ky1 - r * (Ky2 + Kdr * f(r)))$$

where

| | |
|---|---|
| $\beta r$ | = Rear wheel steer angle |
| KyG | = Loop gain |
| Ky1 | = Gain of chosen value |
| r | = Yaw rate of the vehicle |
| Ky2 | = Gain of chosen value |
| Kdr | = Gain of chosen value |
| f(r) | = Differentiator |

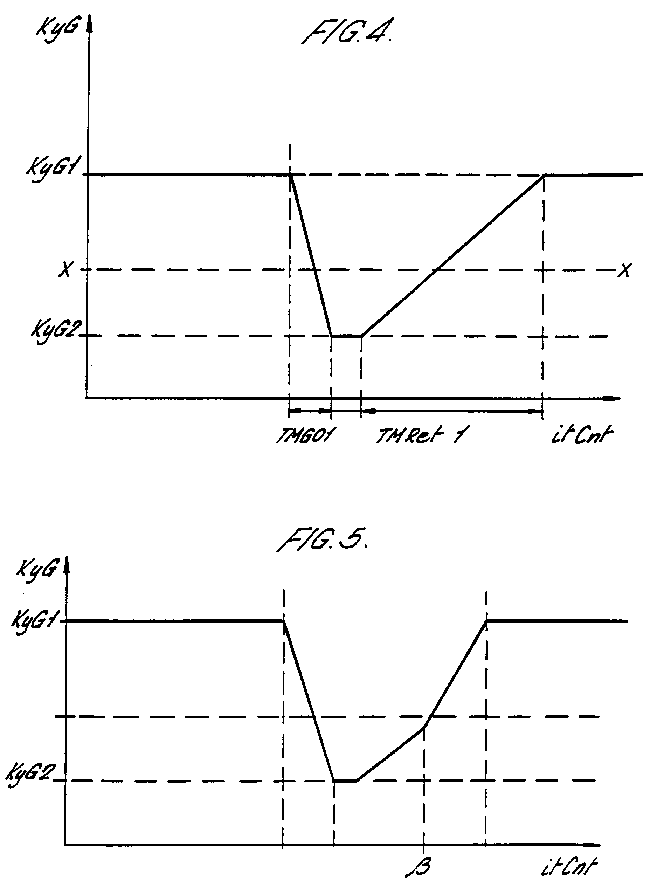

The demanded steer angle $\beta f$ becomes a yaw rate demand rdem by the gain Ky1. The gain Ky1 is varied with vehicle speed in a relationship which is illustrated in Figure 3.

The yaw rate gyrometer 24 provides the measure of yaw rate r which is used in the feedback system. The use of yaw acceleration feedback link provided by the differentiator f(r) and the gain Kdr has been found to improve the stability of the system.

Other ways of controlling the rear steer angle $\beta r$ of the vehicle are possible and these have previously been described in W0-A-90/14980 and will not be elaborated here.

In the present invention the control of the vehicle has been improved by modifying the control system to cope with oversteer slide conditions. In the preferred embodiment described in detail herein the improvement is achieved by override means 50 which reduces loop gain KyG when certain conditions are met. This induces a reduction of the rear steer angle $\beta r$ and therefore reduces the difference in angle between the oversteer position of the rear wheels and the steer angle of the rear wheels in the normal cornering conditions. The override means 50 which is part of the processor 17 does this by switching between two preprogrammed values of gain.

The processor 17 has detection means 51 which uses the following three tests to determine whether an oversteer condition exists in which the gain KyG must be altered:

1. The control processor checks whether:

$$ABS(Vf) > VmynL$$

ABS(Vf) is the absolute value of a filtered measured velocity of a vehicle. The low pass filtered speed must be above a minimum value before any switching of the gain KyG can occur. This ensures that no switching of the gain occurs at parking speeds. The Vf signal is obtained by passing a measured velocity signal V through a low pass filter which averages its value.

2. The detection means 17 checks whether an absolute value of low pass filtered lateral acceleration is above a given threshold:

$$ABS(nyf) > NyLim$$

This is done for the same reason as (1), to avoid unwanted switching of the gain KyG.

3. The detection means 51 checks whether the sign of the filtered lateral acceleration nyf and the sign of the filtered steer angle βf are opposite in sense. This makes certain that the vehicle is in "opposite lock" condition.

All three tests listed above must be met at the same time before KyG is switched. If one of them is not satisfied then the system will revert to or remain in its normal settings. The detection means 51 controls the override means 50 by a suitable control signal.

When the vehicle enters oversteer slide conditions from normal conditions, the three above tests of the detection means are satisfied and it causes the override means 50 to switch the gain KyG from value KyG1 (used in normal conditions) to KyG2 (for limit handling conditions). Once the oversteer slide condition ceases then one or more of the above three tests will rot be satisfied and the override means 50 switches gain KyG back from KyG2 to KyG1. A move from one value to the other is done with a time based linear interpolation. The time needed for the transient between the two values can be set at different values for each direction, ie. going from KyG1 to KyG2 or back from KyG2 to KyG1.

The override means 50 and detection means 51 are both part of processor 17 which is a digital processor operating at a specified clock frequency. An iteration counter in the processor 17 maintains a count itCnt which is used by the override means 50 to calculate two linear interpolation coefficients Trans1 and Trans2 for the different directions of switching between KyG1 and KyG2.

When the detection means 51 detects oversteer conditions and instructs the override means 50 to switch KyG from KyG1 to KyG2 then a time TMGO1 (preprogrammed into the override means 50) is used for the transition. TMG01 is a number of iterations at 200 Hz, ie. TMGO1 * 5 is the number of milliseconds needed. Obviously TMGO1 is only the number of iterations at 200 Hz in the preferred embodiment and would be different if the processor 17 was running slower or faster. TMGO1 in the preferred embodiment system must be a power of two smaller than 32768. A variable TMGO2 is then calculated as follows:

$$TMGO2 = 32768 / TMGO1$$

Two linear interpolation co-efficients Trans1 and Trans2 are then calculated by the override means 50 as follows:

$$Trans2 = TMGO2 * ItCnt / 32768$$

$$Trans1 = 32768 - Trans2$$

The gain KyG is then varied as follows:

$$KyG = (Trans1 * KyG1 + Trans2 * KyG2) / 32768$$

If the vehicle is returning from oversteer conditions to normal operating conditions then the two linear interpolation co-efficients TMGO1 and TMGO2 are replaced in the override means 50 by TMRet1 and TMRet2 which give a longer transient period for return to normal operating conditions from the transient period from normal operating conditions to limit handling conditions.

Since the transient period lasts more than one iteration of the processor 17, it is possible that the oversteer conditions which start the switch from KyG1, to KyG2 cease before the switch to KyG2 is completed. Therefore, it must be possible to return to normal operating conditions before the switch to KyG2 is complete.

A variable TmMin is kept in memory by the override means 50 to set a minimum number of iterations (at 200 Hz) before the process of change between variables KyG1 and KyG2 can be reversed. Obviously TmMin will vary in value for processors operating at different speeds.

If TMGO1 or TMRet1 are of values above TmMin a reversal of the direction of change will occur as follows.

If a reverse is needed then Trans1 is swopped with Trans2 and itCnt is given the value which it would have at point of switch over in the other direction, which is done as follows:

$$TMRat = TmRet1 / TMGO1 \text{ (NB TMRet1 } ) \text{ TMGO1 by choice)}$$

During a transition from KyG1 to KyG2, when a return to KyG1 is required:

$$itCnt = TMRet1 - itCnt * TMRat$$

During a transition from KyG2 to KyG1, when a return to KyG2 is required:

$$itCnt = TMGO1 - itCnt / TMRat$$

EP 0 652 837 B1

TMRat is a constant for a particular embodiment.

The graphic illustration of Figure 4 shows a complete change between KyG1 and KyG2. It will be noted that the change from KyG1 to KyG2 is quicker than the change from KyG2 to KyG1. This is desirable since it is preferable to have the rear wheels move as quickly as possible in an oversteer condition, to allow rear wheel slide, whilst slower motion of the rear wheels is preferable at the end of the oversteer situation, so that the vehicle does not twitch automatically as the wheels return to normal operating conditions.

Figure 4 shows a situation where KyG is varied from KyG1 to KyG2 and then returned from KyG2 to KyG1. The dotted line X - X in the figure shows that for a given value of KyG, there are two values of itCnt, either in the transition from KyG1 to KyG2 or be returned from KyG2 to KyG1.

On a reverse of direction of change during a transition, the value of itCnt is switched between the two values it has for points on the diagram giving the same value of KyG.

Typically, TMGO1 will be chosen at 128 counts (ie. short) whilst TMRet1 will be chosen as 512 (ie. long).

Whilst it is preferable for the change from normal operating conditions of the rear steer wheels to the oversteer conditions to be faster than the reverse, the long period normally set for the change back to normal operating conditions can lead to a problem since the gain KyG might not be back to its original maximum value early enough after the end of the rear steer slide (it can take between 5 milliseconds and 163 seconds for the return). Thus, the car might not have the same response when the driver needs it in normal conditions.

To cure this override problem a further variable AccRat is calculated by the means 50. When the vehicle is in a transient period between KyG2 and KyG1, the value of KyLf (a filtered limit handling demand, the calculation of which is described later) is iteratively checked by the detection means 51 against a set value TrigAcc and the return to original operating conditions controlled by override means 50 is accelerated if the KyLf signal is less than TrigAcc. This check is carried out by the detection means 51.

The system is thus provided with two different return times: TmAcc1 for accelerated return to normal operating conditions and TmNorm1 for normal return to corresponding conditions. These values are used in place of TmRet1 in the override means 51, suitable TmAcc2 and TmNorm2 values being calculated from TmAcc1 and TmNorm1 in the same way that the value TmRet2 is calculated from TMRet1.

The variable AccRat is calculated by the override means 51 as follows:

$$AccRat = TmNorm\ 1\ /\ TmAcc\ 1$$

and if the detection means 51 senses that KyLf is less than TrigAcc then itCnt is calculated by the override means 50 as follows:

$$itCnt = itCnt\ /\ AccRat$$

The swop between a normal return time and an accelerated return time is illustrated in Figure 5 the swop occurring at $itCnt = \beta$

It should be appreciated that the provision of an accelerated return time is not an essential feature of the invention. It should also be appreciated that the specific details of the closed loop control system for the rear wheels described in the specification should not be considered as essential. The closed loop system could for instance use lateral acceleration, rather than yaw rate to compare actual vehicle response with desired vehicle response.

Whilst in the preferred embodiment the gain of the control loop is varied the system could also work by changing the demand signal to the rear wheels. For instance the applicant envisages a system in which the yaw rate demand rdem calculated from the desired steer angle $\beta f$ is calculated by a function which is altered when slide conditions are sensed. For instance the gain Ky1 could be ramped between a normal operating value and a value for slide conditions in a similar fashion to the gain KyG.

It is also possible to use a fourth test, in addition to the three tests used above, to determine whether an oversteer condition exists. For the fourth test the detection means 17 calculates a variable KyL called the "limit handling demand". The "limit handling demand" is calculated as a function of either measured yaw rate or lateral acceleration.

Using yaw rate in the calculation a "steady state" demand Ky21 is calculated as follows:

$$Ky21 = UndstG1 * rdem + UndStG2 * r$$

where

Ky21 = "Steady state demand"
UndstG1 = Chosen gain
UndstG2 = Chosen gain
r = Measured yaw rate

6

and rdem as shown is calculated as follows:

$$rdem = \beta f * Ky1$$

where

rdem   = Demanded yaw rate
Ky1   = Chosen gain
$\beta f$   = Desired steer angle

A "transient demand" Ky22 is also calculated using variables that are zero in steady state conditions, ie. the product of rate of change of desired steer angle and also yaw acceleration.

$$Ky22 = TranG1 * D\beta f + TranG2 * Dr$$

where

TranG1   = Chosen gain
$D\beta f$   = $d\beta f/dt$ = Rate of change of desired steer angle
TranG2   = Chosen gain
Dr   = dr/dt = Yaw acceleration

Each one of the demands Ky21 and KY22 are multiplied and added together to calculate the limit handling demand KyL as follows:

$$KyL = KTrig1 * Ky21 + KTrig2 * Ky22 \tag{A}$$

where

KTrig1   = Chosen gain
KTrig2   = Chosen gain

Alternatively, Ky21 can be calculated from measured lateral acceleration ny as follows:

$$Ky21 = UndstG1 * rdem + UndstG2 * ny$$

where

ny=   Lateral acceleration

In the preferred embodiment some damping is incorporated in the limit handling demand by using a differentiated value of lateral acceleration as follows:

$$KyL_1 = KyL + KDny + Dny$$

where

Dny   = Lateral acceleration
K   = Chosen gain
KyL   = Limit handling demand as calculated in equation A
$KyL_1$   = modified limit handling demand

The limit handling demand ($KyL$ or $KyL_1$) is averaged with previous value:

$$KyLnew = (KyL + KyL \text{ previous})$$

The final calculated demand is finally low pass filtered to and becomes the low pass filtered limit handling demand KyLf. The value of the filter constant in the low pass filter is not crucial, but limiting the frequency of the limit handling demand to frequencies below 5 Hz is preferred. The detection means 51 determines whether:

$$\text{Abs (KyLf)} > \text{Trig L} \qquad \text{(B)}$$

where

ABs(x)  = Absolute value of x
KyLf   = Filtered limit handling demand
TrigL   = Chosen threshold

When the fourth test is used then the controller only recognises oversteer slide conditions when the limit handling demand is above the given value TrigL. TrigL can be determined by experimentation.

It has been found that the three earlier mentioned tests give good control if used by themselves and the fourth test is not strictly necessary. However, the fourth test can be used in addition to the above three tests in a control system, with KyG2 being switched only when all four tests are satisfied.

The invention lies in the realisation that it is beneficial to alter the operation of a control system for steering the rear wheels of a vehicle when the vehicle is sliding and providing means to detect the slide.

The invention lies in the modification of a rear wheel steer system during oversteer conditions rather than in the provision of a rear wheel steer system in itself.

## Claims

1. A steering system for the rear wheels (13,14) of a vehicle comprising:

   an actuator (18) for steering the rear wheels,
   sensor means (20,21,23,24) for measuring vehicle parameters and generating signals ($\beta$f, Vf, nyf, r) indicative thereof, and
   a control system for controlling the actuator (18) to steer the rear wheels comprising a processor (17) which processes the signals ($\beta$f, Vf, nyf, r) generated by the sensor means (20, 21, 23, 24) and controls the actuator (18) accordingly,
   wherein the control system has detection means (51) to detect when the signals ($\beta$f, Vf, nyf,r) generated by the sensor means (20,21,23,24) indicate that the vehicle is sliding and override means (50) which modifies the operation of the control system when sliding is detected, and
   wherein the sensor means (20,21,23,24) measure the displacement of a manually operable steering element (22) of the vehicle and from the measurement generate a desired steer angle signal (($\beta$f) characterised in that,

   the sensor means (20,21,23,24) also measure yaw rate (r) of the vehicle and generate measured yaw rate signal (r), the processor (17) determines a desired yaw rate signal (rdem) as a function of the desired steer angle signal indicative of the desired steer angle ($\beta$f) and the control system comprises a closed yaw rate error control loop feedback system for controlling the steer angle ($\beta$r) of the rear wheels (13,14) as a function of the error between the measured yaw rate signal (r) and the desired yaw rate signal (rdem), the override means (50) altering a gain (KyG) in the yaw rate error control loop when sliding is detected.

2. A steering system as claimed in claim 1 wherein the override means (50) reduces the gain (KyG) of the yaw error control loop when sliding is detected.

3. A steering system as claimed in any one of the preceding claims wherein the detection means (51) is adapted to detect oversteer slide.

4. A steering system as claimed in any one of the preceding claims wherein the sensor means (20,21,23,24) further measure vehicle velocity signal and generate a measured velocity signal (Vf) and the detection means (51) compares the measured velocity signal (Vf) with a preprogrammed velocity threshold, the override means (50) only modifying the operation of the control system when the detection means (51) detects that the measured velocity signal (Vf) exceeds the velocity threshold.

5. A steering system as claimed in any one of the preceding claims wherein the sensor means (20,21,23,24) additionally measure lateral acceleration of the vehicle and generate a measured lateral acceleration signal (nyf) and the detection means (51) compares the measured lateral acceleration signal (nyf) with a first preprogrammed lateral acceleration threshold, the override means (50) only modifying the operation of the control system when the detection means (51) detects that the measured lateral acceleration signal (nyf) exceeds the first lateral acceleration threshold.

6. A steering system as claimed in Claim 5 wherein the detection means (51) includes a low pass filter by which the measured lateral acceleration signal (nyf) is filtered before it is compared with the lateral acceleration threshold.

7. A steering system as claimed in any one of claims 1 to 4 wherein the sensor means (20,21,23,24) additionally measure lateral acceleration of the vehicle and generate a measured lateral acceleration signal (nyf) and the detection means (51) combines the measured yaw rate signal (r), the desired steer angle signal (βf) and the measured lateral acceleration signal (nyf) according to a preprogrammed algorithm to generate a variable which is compared with a preprogrammed value, the override means (50) only modifying the operation of the control system when the detection means (51) detects that the variable exceeds the preprogrammed value.

8. A steering system as claimed in any one of claims 1 to 4 wherein the sensor means (20,21,23,24) additionally measure lateral acceleration of the vehicle and generate a measured lateral acceleration signal (nyf) and the detection means (51) monitors whether the desired steer angle signal (βf) and the measured lateral acceleration signal (nyf) are in the same sense and the override means (50) only modifies the operation of the control system then the detection means (51) detects that the desired steer angle signal (βf) and the measured lateral acceleration signal (nyf) are of opposite sense.

9. A steering system as claimed in any one of claims 5,6 or 7 wherein the detection means (51) monitors whether the desired steer angle signal (βf) and the measured lateral acceleration signal (nyf) are in the same sense and the override means (50) only modifies the operation of the control system when the detection means detects that the desired steer angle (βf) and the lateral acceleration signal (nyf) are of opposite sense.

10. A steering system as claimed in any one of claims 1,2,3 or 4 wherein the override means (50) reduces a gain (KyG) of the control system from a first level (KyG1) to a second level (KyG2) when the detection means (51) detects that the signals (βf, Vf, nyf, r) generated by the sensor means (20,21,23,24) indicate that the vehicle is sliding and the override means (50) increases the gain (KyG) from the second level (KyG2) to the first level (KyG1) when the detection means (51) detects from the signals (βf, Vf, nyf, r) generated by the sensor means (20,21,23,24) that the sliding of the vehicle has stopped, the override means (50) ramping the gain between the first and second levels at preprogrammed rates (TMG01, TMRet1).

11. A steering system as claimed in Claim 10 wherein the rate (TMG01) at which the override means (50) ramps the gain (KyG) from the first level (KyG1) to the lower second level (KyG2) is faster than the rate (TMRet1) at which the override means (50) ramps the gain (KyG) from the second level (KyG2) to the first level (KyG1).

12. A steering system as claimed in Claim 11 wherein the sensor means (20,21,23,24) additionally measure lateral acceleration of the vehicle and generate a measured lateral acceleration signal (nyf) and the detection means (51) compares the measured lateral acceleration signal (nyf) with a second preprogrammed lateral acceleration threshold, the override means increasing the rate at which the gain (KyG) of the control system is ramped from the second level to the first level when the detection means (51) detects that the measured lateral acceleration signal (nyf) is less than the second preprogrammed lateral acceleration threshold.

13. A steering system as claimed in any one of the preceding claims wherein the override means (50) introduces a phase lead in the yaw rate error control loop when the detection means (51) detects that the signals (βf,Vf,nyf,r) generated by the sensor means (20,21,22,24) indicate that the vehicle is sliding.

14. A steering system as claimed in any one of claims 1 to 12 wherein the override means (5) introduces a phase lag in the yaw error control loop when the detection means (51) detects that the signals (βf, Vf, nyf, r) generated by the sensor means (20, 21, 23,24) indicate that the vehicle is sliding.

**Patentansprüche**

1. Lenksystem für die Hinterräder (13, 14) eines Fahrzeugs mit:

   einem Stellglied (18) zum Lenken der Hinterräder, Sensormitteln (20, 21, 23, 24) zum Messen der Fahrzeugparameter und Erzeugen der diese anzeigenden Signale (βf, Vf, nyf, r), und
   einem Steuersystem zum Steuern des Stellgliedes (18), um die Hinterräder zu lenken, mit einem Prozessor (17), der die Signale (βf, Vf, nyf, r), die von den Sensormitteln (20, 21, 23, 24) erzeugt worden sind, verarbeitet und das Stellglied (18) entsprechend steuert,

wobei das Steuersystem Detektormittel (51) zum Detektieren, wenn die von den Sensormitteln (20, 21, 23, 24) erzeugten Signale ($\beta$f, Vf, nyf, r) anzeigen, daß das Fahrzeug rutscht, und Übersteuerungsmittel (50) hat, die den Betrieb des Steuersystems modifizieren, wenn Rutschen detektiert worden ist, und

wobei die Sensormittel (20, 21, 23, 24) die Verschiebung eines manuell betätigbaren Lenkelements (22) des Fahrzeugs messen, und aus dem Meßergebnis ein gewünschtes Lenkwinkelsignal ($\beta$f) erzeugen,

dadurch **gekennzeichnet,** daß

die Sensormittel (20, 21, 23, 24) auch die Giergeschwindigkeit (r) des Fahrzeugs messen und das gemessene Giergeschwindigkeitssignal (r) erzeugen, der Prozessor (17) ein gewünschtes Giergeschwindigkeitssignal (rdem) als Funktion des gewünschten Lenkwinkelsignals, das den gewünschten Lenkwinkel ($\beta$f) anzeigt, bestimmt, und das Steuersystem zur Steuerung des Lenkwinkels ($\beta$f) der Hinterräder (13, 14) als Funktion des Fehlers zwischen dem gemessenen Giergeschwindigkeitssignal (r) und dem gewünschten Giergeschwindigkeitssignal (rdem) ein geschlossenes Rückkopplungs-Regelkreissystem für Giergeschwindigkeitsfehler hat, wobei die Übersteuerungsmittel (50) einen Faktor (KyG) in dem Giergeschwindigkeitsfehlersteuerkreis ändern, wenn Rutschen detektiert wird.

2.  Lenksystem nach Anspruch 1,
    wobei die Übersteuerungsmittel (50) den Faktor (Kyg) des Gierfehlerregelkreises verringern, wenn Rutschen detektiert worden ist.

3.  Lenksystem nach einem der vorstehenden Ansprüche,
    wobei die Detektormittel (51) so ausgebildet sind, daß sie Übersteuerungsrutschen detektieren.

4.  Lenksystem nach einem der vorstehenden Ansprüche,
    wobei die Sensormittel (20, 21, 23, 24) weiterhin die Fahrzeuggeschwindigkeit messen und in gemessenes Geschwindigkeitssignal (Vf) erzeugen, und die Detektormittel (51) das gemessene Geschwindigkeitssignal (Vf) mit einer vorprogrammierten Geschwindigkeitsschwelle vergleichen, wobei die Übersteuerungsmittel (50) den Betrieb des Steuersystems nur modifizieren, wenn die Detektormittel (51) detektieren, daß das gemessene Geschwindigkeitssignal (Vf) die Geschwindigkeitsschwelle überschreitet.

5.  Lenksystem nach einem der vorstehenden Ansprüche,
    wobei die Sensormittel (20, 21, 23, 24) zusätzlich die Seitenbeschleunigung des Fahrzeugs messen und ein gemessenes Seitenbeschleunigungssignal (nyf) erzeugen und die Detektormittel (51) das gemessene Seitenbeschleunigungssignal (nyf) mit einer ersten vorprogrammierten Seitenbeschleunigungsschwelle vergleichen, wobei die Übersteuerungsmittel (50) den Betrieb des Steuersystems nur modifizieren, wenn die Detektormittel (51) detektieren, daß das gemessene Seitenbeschleunigungssignal (nyf) die erste Seitenbeschleunigungsschwelle überschreitet.

6.  Lenksystem nach Anspruch 5,
    wobei die Detektormittel (51) ein Tiefpaßfilter aufweisen, mittels dem das gemessene Seitenbeschleunigungssignal (nyf) gefiltert wird, bevor es mit der Seitenbeschleunigungsschwelle verglichen wird.

7.  Lenksystem nach einem der vorstehenden Ansprüche 1 bis 4,
    wobei die Sensormittel (20, 21, 23, 24) zusätzlich die Seitenbeschleunigung des Fahrzeugs messen und ein gemessenes Seitenbeschleunigungssignal (nyf) erzeugen, und die Detektormittel (51) das gemessene Giergeschwindigkeitssignal (r), das gewünschte Lenkwinkelsignal ($\beta$f) und das gemessene Seitenbeschleunigungssignal (nyf) gemäß einem programmierten Algorithmus kombinieren, um eine Variable zu erzeugen, die mit einem programmierten Wert verglichen wird, wobei die Übersteuerungsmittel (50) den Betrieb des Steuersystems nur modifizieren, wenn die Detektormittel (51) detektieren, daß die Variable den vorprogrammierten Wert überschreitet.

8.  Lenksystem nach einem der Ansprüche 1 bis 4,
    wobei die Sensormittel (20, 21, 23, 24) zusätzlich die Seitenbeschleunigung des Fahrzeugs messen und ein gemessenes Seitenbeschleunigungssignal (nyf) erzeugen, und die Detektormittel (51) überwachen, ob das gewünschte Lenkwinkelsignal ($\beta$f) und das gemessene Seitenbeschleunigungssignal (nyf) dieselbe Richtung haben, und die Übersteuerungsmittel (50) nur dann den Betrieb des Steuersystems modifizieren, wenn die Detektormittel (51) detektieren, daß das gewünschte Lenkwinkelsignal (bf) und das gemessene Seitenbeschleunigungssignal (nyf) einander entgegengesetzte Richtung haben.

9. Lenksystem nach einem der Ansprüche 5, 6 oder 7,
   wobei die Detektormittel (51) überwachen, ob das gewünschte Lenkwinkelsignal (βf) und das gemessene Seitenbeschleunigungssignal (nyf) diesselbe Richtung haben, und die Übersteuerungsmittel (50) den Betrieb des Steuersystems nur dann modifizieren, wenn die Detektormittel detektieren, daß der gewünschte Lenkwinkel (βf) und das Seitenbeschleunigungssignal (nyf) einander entgegengesetzte Richtung haben.

10. Lenksystem nach einem der Ansprüche 1, 2, 3 oder 4,
    wobei die Übersteuerungsmittel (50) einen Faktor (KyG) des Steuersystems von einem ersten Pegel (KyG1) auf einen zweiten Pegel (KyG2) reduzieren, wenn die Detektormittel (51) detektieren, daß die Signale (βf, Vf, nyf, r) die von den Sensormitteln (20, 21, 23, 24) erzeugt worden sind, anzeigen, daß das Fahrzeug rutscht, und die Übersteuerungsmittel (50) den Faktor (KyG) von dem zweiten Pegel (KyG2) auf den ersten Pegel (KyG1) erhöhen, wenn die Detektormittel (51) aus den Signalen (βf, Vf, nyf, r), die von den Sensormitteln (20, 21, 23, 24) erzeugt worden sind, detektieren, daß das Rutschen des Fahrzeugs aufgehört hat, wobei die Übersteuerungsmittel (50) den Faktor zwischen dem ersten und zweiten Pegel mit vorprogrammierten Geschwindigkeiten (TMG01, TMRet1) übergehen lassen.

11. Lenksystem nach Anspruch 10,
    wobei die Geschwindigkeit (TMG01) mit der die Übersteuerungsmittel (50) den Faktor (KyG) vom ersten Pegel (KyG1) auf den niedrigeren zweiten Pegel (KyG2) absenken, schneller als die Geschwindigkeit (TMRet1) ist, mit der die Übersteuerungsmittel (50) den Faktor (KyG) vom zweiten Pegel (KyG2) auf den ersten Pegel (KyG1) anheben.

12. Lenksystem nach Anspruch 11,
    wobei die Sensormittel (20, 21, 23, 24) zusätzlich die Seitenbeschleunigung des Fahrzeugs messen, und ein gemessenes Seitenbeschleunigungssignal (nyf) erzeugen, und die Detektormittel (51) das gemessene Seitenbeschleunigungsignal (nyf) mit einer zweiten vorprogrammierten Seitenbeschleunigungsschwelle vergleichen, wobei die Übersteuerungsmittel die Geschwindigkeit, mit der der Faktor (KyG) des Steuersystems vom zweiten Pegel auf den ersten Pegel ansteigt, erhöhen, wenn die Detektormittel (51) detektieren, daß das gemessene Seitenbeschleunigungssignal (nyf) kleiner als die zweite programmierte Seitenbeschleunigungsschwelle ist.

13. Lenksystem nach einem der vorstehenden Ansprüche,
    wobei die Übersteuerungsmittel (50) in den Giergeschwindigkeitsfehler-Regelkreis eine Phasenvoreilung einführen, wenn die Detektormittel (51) detektieren, daß die Signale (βf, Vf, nyf, r), die von den Sensormitteln (20, 21, 23, 24) erzeugt worden sind, anzeigen, daß das Fahrzeug rutscht.

14. Lenksystem nach einem der Ansprüche 1 und 2,
    wobei die Übersteuerungsmittel (50) in den Giergeschwindigkeitsfehler-Regelkreis eine Phasenverzögerung einführen, wenn die Detektormittel (51) detektieren, daß die Signale (βf, Vf, nyf, r), die von den Sensormitteln (20, 21, 23, 24) erzeugt worden sind, anzeigen, daß das Fahrzeug rutscht.

**Revendications**

1. Système de direction pour les roues arrière (13, 14) d'un véhicule, comprenant :

   un actionneur (18) pour diriger les roues arrières ;
   des moyens capteurs (20, 21, 23, 24) pour mesurer des paramètres de véhicule et pour produire des signaux (βf, Vf, nyf, r) qui les représentent ; et
   un système de commande pour commander l'actionneur (18) pour diriger les roues arrières, comprenant un processeur (17) qui traite les signaux (βf, Vf, nyf, r) produits par les moyens capteurs (20, 21, 23, 24) et qui commande l'actionneur (18) en conséquence ;
   dans lequel le système de commande comporte un moyen de détection (51) pour détecter si les signaux (βf, Vf, nyf, r) produits par les moyens capteurs (20, 21, 23; 24) indiquent que le véhicule dérape, et un moyen d'intervention prioritaire (50) qui modifie le fonctionnement du système de commande lorsque le dérapage est détecté ; et
   dans lequel les moyens capteurs (20, 21, 23, 24) mesurent le décalage d'un élément de direction manoeuvrable manuellement (22) du véhicule et produit, à partir de la mesure, un signal d'angle de direction voulu (βf) ;
   caractérisé :

en ce que les moyens capteurs (20, 21, 23, 24) mesurent aussi la vitesse de lacet (r) du véhicule et produisent un signal de vitesse de lacet mesurée (r) ; en ce que le processeur (17) détermine un signal de vitesse de lacet voulue (rdem) en fonction du signal d'angle de direction voulu représentant l'angle de direction voulu (βf) ; et en ce que le système de commande comprend un système de contre-réaction en boucle fermée de commande d'erreur de vitesse de lacet pour commander l'angle de direction (βr) des roues arrière (13, 14) en fonction de l'erreur entre le signal de vitesse de lacet mesurée (r) et le signal de vitesse de lacet voulue (rdem), le moyen d'intervention (50) modifiant le gain (KyG) de la boucle de commande d'erreur de vitesse de lacet lorsque le dérapage est détecté.

2. Système de direction selon la revendication 1, dans lequel le moyen d'intervention (50) réduit le gain (KyG) de la boucle de commande d'erreur de lacet lorsqu'un dérapage est détecté.

3. Système de direction selon l'une quelconque des revendications précédentes, dans lequel le moyen de détection (51) est apte à détecter un dérapage en survirage.

4. Système de direction selon l'une quelconque des revendications précédentes, dans lequel les moyens capteurs (20, 21, 23, 24) mesurent, en outre, un signal de vitesse de véhicule et produisent un signal de vitesse mesurée (Vf) ; et dans lequel le moyen de détection (51) compare le signal de vitesse mesuré (Vf) à un seuil de vitesse préprogrammé, le moyen d'intervention (50) modifiant le fonctionnement du système de commande seulement lorsque le moyen de détection (51) détecte que le signal de vitesse mesurée (Vf) dépasse le seuil de vitesse.

5. Système de direction selon l'une quelconque des revendications précédentes, dans lequel les moyens capteurs (20, 21, 23, 24) mesurent, en plus, l'accélération transversale du véhicule et produisent un signal d'accélération transversale mesurée (nyf) ; et dans lequel le moyen de détection (51) compare le signal d'accélération transversale (nyf) mesurée avec un premier seuil d'accélération transversale préprogrammé, le moyen d'intervention (50) modifiant le fonctionnement du système de commande seulement lorsque le moyen de détection (51) détecte que le signal d'accélération transversale mesurée (nyf) dépasse le premier seuil d'accélération transversale.

6. Système de direction selon la revendication 5, dans lequel le moyen de détection (51) comprend un filtre passe-bas qui filtre le signal d'accélération transversale mesurée (nyf) avant qu'il soit compare au seuil d'accélération transversale.

7. Système de direction salon l'une quelconque des revendications 1 à 4, dans lequel les moyens capteurs (20, 21, 23, 24) mesurent, en plus, l'accélération transversale du véhicule et produisent un signal d'accélération transversale mesurée (nyf) ; et dans lequel le moyen de détection (51) combine le signal de vitesse de lacet mesurée (r), le signal d'angle de direction voulu (βf) et le signal d'accélération transversale mesurée (nyf) selon un algorithme préprogrammé pour produire une variable qui est comparée à une valeur préprogrammée, le moyen d'intervention (50) modifiant le fonctionnement du système de commande seulement lorsque le moyen de détection (51) détecte que la variable dépasse la valeur préprogrammée.

8. Système de direction selon l'une quelconque des revendications 1 à 4, dans lequel les moyens capteurs (20, 21, 23, 24) mesurent, en plus, l'accélération transversale du véhicule et produisent un signal d'accélération transversale mesurée (nyf) ; et dans lequel le moyen de détection (51) surveille si le signal d'angle de direction voulu (βf) et le signal d'accélération transversale mesurée (nyf) sont dans le même sens ; et dans lequel le moyen d'intervention (50) modifie le fonctionnement du système de commande seulement lorsque le moyen de détection (51) détecte que le signal d'angle de direction voulu (βf) et le signal d'accélération transversale mesurée (nyf) sont de sens contraires.

9. Système de direction selon l'une quelconque des revendications 5, 6 ou 7, dans lequel le moyen de détection (51) surveille si le signal d'angle de direction voulu (βf) et le signal d'accélération transversale mesurée (nyf) sont dans le même sens ; et dans lequel le moyen d'intervention (50) modifie le fonctionnement du système de commande seulement lorsque le moyen de détection détecte que le signal d'angle de direction voulu (βf) et le signal d'accélération transversale mesurée (nyf) sont de sens contraires.

10. Système de direction selon l'une quelconque des revendications 1, 2, 3, ou 4, dans lequel le moyen d'intervention (50) réduit le gain (KyG) du système de commande d'un premier niveau (KyG1) à un second niveau (KyG2) lorsque le moyen de détection (51) détecte que les signaux (βf, Vf, nyf, r) produits par les moyens capteurs (20, 21, 23, 24) indiquent que le véhicule dérape ; et dans lequel le moyen d'intervention (50) augmente le gain (KyG) du second niveau (KyG2) au premier niveau (KyG1) lorsque le moyen de détection (51) détecte, à partir des signaux (βf, Vf, nyf, r) produits par les moyens capteurs (20, 21, 23, 24), que le dérapage du véhicule s'est arrêté, le moyen d'intervention (50) faisant varier le gain entre les premier et second niveaux à des rythmes préprogrammés (TMG01, TMRet1).

11. Système de direction selon la revendication 10, dans lequel le rythme (TMG01), auquel le moyen d'intervention (50) fait varier le gain (KyG) du premier niveau (KyG1) au second niveau (KyG2) inférieur, est plus rapide que le rythme (TMRet1) auquel le moyen d'intervention (50) fait varier le gain (KyG) du second niveau (KyG2) au premier niveau (KyG1).

12. Système de direction selon la revendication 11, dans lequel les moyens capteurs (20, 21, 23, 24) mesurent, en plus, l'accélération transversale du véhicule et produisent un signal d'accélération transversale mesurée (nyf) ; et dans lequel le moyen de détection (51) compare le signal d'accélération transversale (nyf) mesurée avec un second seuil d'accélération transversale préprogrammé, le moyen d'intervention augmentant le rythme auquel le gain (KyG) du système de commande varie du second niveau au premier niveau lorsque le moyen de détection (51) détecte que le signal d'accélération transversale mesurée (nyf) est plus petit que le second seuil d'accélération transversale préprogrammé.

13. Système de direction selon l'une quelconque des revendications précédentes, dans lequel le moyen d'intervention (50) introduit une avance de phase dans la boucle de commande d'erreur de vitesse de lacet lorsque le moyen de détection (51) détecte que les signaux ($\beta$f, Vf, nyf, r) produits par les moyens capteurs (20, 21, 23, 24) indiquent que le véhicule dérape.

14. Système de direction selon l'une quelconque des revendications 1 à 12, dans lequel le moyen d'intervention (50) introduit un retard de phase dans la boucle de commande d'erreur de vitesse de lacet lorsque le moyen de détection (51) détecte que les signaux ($\beta$f, Vf, nyf, r) produits par les moyens capteurs (20, 21, 23, 24) indiquent que le véhicule dérape.

FIG. 1.

FIG. 2.

FIG. 3.

VEHICLE SPEED V (MPH)

FIG.4.

FIG.5.